Europäisches Patentamt

European Patent Office

Office européen des brevets

(11) Veröffentlichungsnummer: **0 189 566**
A2

# (12) EUROPÄISCHE PATENTANMELDUNG

(21) Anmeldenummer: 85115689.3

(22) Anmeldetag: 10.12.85

(51) Int. Cl.⁴: **H 02 B 1/24**

(30) Priorität: 28.12.84 DD 271877

(43) Veröffentlichungstag der Anmeldung:
06.08.86 Patentblatt 86/32

(84) Benannte Vertragsstaaten:
AT BE DE FR GB IT NL SE

(71) Anmelder: Institut Prüffeld für elektrische
Hochleistungstechnik
Leninallee 376
DDR-1140 Berlin(DD)

(72) Erfinder: Gerlach, Horst, Dr.-Ing.
Genslerstrasse 44
DDR-1125 Berlin(DD)

(72) Erfinder: Mischnick, Ulrich, Dipl.-Ing.
Hirschstrasse 15
DDR-1422 Hennigsdorf(DD)

(74) Vertreter: Patentanwälte Beetz sen. - Beetz jun. Timpe -
Siegfried - Schmitt-Fumian
Steinsdorfstrasse 10
D-8000 München 22(DE)

(54) Schaltanlage mit einer in der Einspeisung vorgesehenen zentralen Strombegrenzungs- und Kurzschlusseinrichtung.

(57) Bei dieser Schaltanlage sind in der Einspeisung (15; 16) eine zentrale Strombegrenzungs- und Kurzschlußeinrichtung (1; 2), ein superschneller Kurzschließer (38) und ein Leistungsschalter (3) sowie in den Abgängen (20; 21; 22; 23) Abgangsschalter (24; 25; 26; 27;) vorgesehen, wobei bei mehrfacher Einspeisung die Sammelschienenabschnitte (18; 19) über einen Kuppelschalter (17) gekoppelt sind.

Zwecks Verwendung von Schaltgeräten mit niedriger Abschaltleistung bei Vermeidung von Hilfssammelschienen und von stromlosen Pausen in den Abgängen und zum sicheren Schutz der Schaltanlage und aller Abgänge bei auftretenden Kurzschluß- und Fehlerströmen sowie bei Störlichtbogenfehlern ist jeder Strombegrenzungs- und Kurzschlußeinrichtung (1; 2) eine eine logische Verknüpfung von Strominformationen durchführende Anpaßautomatik (37) zugeordnet, die bei Fehlerströmen einer bestimmten Größe dafür sorgt, daß der Schwellwert für das Ansprechen der Strombegrenzungs- und Kurzschlußeinrichtung (; 2) zur Herbeiführung eines Kurzschlusses eingestellt wird und bei Störlichtbogenfehlern, daß die Strombahn des Kurzschließers (38) nach der Reaktionszeit der Strombegrenzungs- und Kurzschlußeinrichtung (1; 2) entlastet wird, wobei gleichzeitig dieser Fehlerstrom durch den Leistungsschalter (3) abschaltbar ist.

./...

Fig. 2

1

## Schaltanlage mit einer in der Einspeisung vorgesehenen zentralen Strombegrenzungs- und Kurzschlußeinrichtung

Die Erfindung betrifft eine Schaltanlage mit einer in der Einspeisung vorgesehenen zentralen Strombegrenzungs- und Kurzschlußeinrichtung, einem superschnellen Kurzschließer und einem Leistungsschalter sowie mit in den Abgängen vorgesehenen Abgangsschaltern, wobei bei mehrfacher Einspeisung die Sammelschienenabschnitte über einen Kuppelschalter gekoppelt sind.

Von Schaltanlagen zur Verteilung von Elektroenergie in Industrie- und öffentlichen Netzen wird u. a. gefordert, daß durch sie eine hohe Versorgungszuverlässigkeit und eine sichere Betriebsführung gewährleistet wird. In diesem Zusammenhang ist nach der DE-AS 1 690 739, 21 c, 42/03 eine vollisolierte Hochspannungsschaltanlage bekannt, bei der der für die Schalter notwendige Aufwand verringert werden soll. Dabei wird die Sammelschiene dieser Hochspannungsschaltanlage über einen Leistungsschalter gespeist, und die Schalter, über die die Abgänge an die Sammelschiene angeschlossen sind, sind schnell schaltende Trennschalter, die durch Verriegelung gegenüber dem Leistungsschalter betriebsmäßig in einer stromlosen Pause ausschaltbar sind, welche durch kurzzeitiges Öffnen des Leistungsschalters mittels eines Speicherantriebes für Kurzunterbrechung erzeugt wird. Bei dieser Schaltanlage ist zwar durch die Verwendung von schnellschaltenden Trennschaltern anstelle von Lasttrennschaltern eine Vereinfachung des Anlagenaufbaues zu verzeichnen, sie hat jedoch den Nachteil, daß bei notwendigen
Betriebsschaltungen Kurzunterbrechungen in den Abgängen,
in denen keine Betriebs- oder Störungsströme zu schalten
sind, eintreten. Für zahlreiche Verbraucher, wie z. B.
Leuchtstofflampen und Prozeßrechner sind derartige Kurzunterbrechungen nicht akzeptabel. Zur Vermeidung dieses
Nachteiles ist es zwar auch schon nach der DD-PS 215 427,
H 02 B, 7/06 bekannt, bei einer Schaltanlage, die mit
einer einen reduzierten Querschnitt besitzenden Hilfssammelschiene versehen ist, mit dieser einerseits den
jedem Abgang zugeordneten Hilfstrenner, der parallel zu
dem zu jedem Abgang gehörenden, an der Hauptsammelschiene
angeschlossenen Abgangstrenner angeordnet ist, zu verbinden und an diese andererseits einen als Kuppelschalter
dienenden Leistungsschalter anzuschließen, der gemeinsam
mit dem Leistungsschalter der Einspeisung ebenfalls mit
der Hauptsammelschiene in Verbindung steht, aber dieser
Schaltanlage haftet wieder der Nachteil an, daß ein zusätzlicher Raumbedarf für die Hilfssammelschiene und damit auch für ihre Isolation erforderlich ist.

Hier will die Erfindung Abhilfe schaffen. Die Erfindung,
wie sie in den Ansprüchen gekennzeichnet ist, löst die
Aufgabe, eine Schaltanlage zu schaffen, bei der auf die
in der Einspeisung vorgesehene Strombegrenzungs- und
Kurzschlußeinrichtung und auf die in den Abgängen vorgesehenen Abgangsschalter sowie auf den superschnellen
Kurzschließer in der Einspeisung so Einfluß zu nehmen
ist, daß einerseits Kurzschlußströme, Einschalt- und
Anlaufströme sowie Fehlerströme, die einen festgelegten
mehrfachen Wert des Nennstromes des jeweiligen Abgangs-

schalters besitzen, und andererseits Fehlerströme, die kleiner sind als der festgelegte mehrfache Wert des Nennstromes des jeweiligen Abganges sowie Störlichtbogenfehler sicher beherrscht werden, dadurch, daß jeder in einer Einspeisung vorgesehenen zentralen Strombegrenzungs- und Kurzschlußeinrichtung, die eine verminderte Empfindlichkeit für Einschalt- und Anlaufströme besitzt, eine eine logische Verknüpfung von Strominformationen durchführende Anpaßautomatik zugeordnet ist, die einerseits über eine Informationsleitung und einen jedem Abgang zugeordneten Logikbaustein mit der Stromerfassung als Bestandteil des ebenfalls jedem Abgang zugeordneten Fehlerstromsensors in Verbindung steht, derart, daß bei Fehlerströmen, die größer sind als ein festgelegter mehrfacher Wert des Nennstromes des jeweiligen Abgangsschalters, der Schwellwert für das Ansprechen der Strombegrenzungs- und Kurzschlußeinrichtung zur Herbeiführung eines Kurzschlusses herabsetzbar ist, und andererseits über eine weitere Informationsleitung über einen der Einspeisung zugeordneten Logikbaustein mit der schnellen Störlichtbogenerkennung als Bestandteil des ebenfalls der Einspeisung zugeordneten Fehlerstromsensors in Verbindung steht, derart, daß die Strombahn des superschnellen Kurzschließers nach der Reaktionszeit der Strombegrenzungs- und Kurzschlußeinrichtung entlastbar ist, wobei gleichzeitig dieser Fehlerstrom durch den in der Einspeisung liegenden Leistungsschalter abschaltbar ist. Ist bei dieser Schaltanlage der Schwellwert für das Ansprechen der Strombegrenzungs- und Kurzschlußeinrichtung zur Herbeiführung eines Kurzschlusses herabgesetzt, so ist der fehlerbehaftete Abgang durch den diesem Abgang zugeordneten Abgangsschalter abschaltbar, wonach die Strombegrenzungs- und Kurzschlußeinrichtung wieder ihre Ausgangslage nach Aufhebung der Erdverbindung durch das der Strombegrenzungs- und Kurzschlußeinrichtung zugeordnete Schaltgerät einnimmt.

Sind die abzuschaltenden Fehlerströme kleiner als der festgelegte mehrfache Wert des Nennstromes des jeweiligen Abganges, so ist der diese Fehlerströme abschaltende Abgangsschalter von der Stromerfassung als Bestandteil des Fehlerstromsensors über den Logikbaustein direkt zur Abschaltung des Fehlerstromes ansteuerbar.

Bei der so ausgebildeten Schaltanlage kann anstelle des in der jeweiligen Einspeisung befindlichen Leistungsschalters ein Lastschalter oder ein Lasttrennschalter vorgesehen sein, während die Abgangsschalter und Kuppelschalter vorteilhaft Lasttrennschalter sind.

Um den Schwellwert für das Ansprechen der Strombegrenzungs- und Kurzschlußeinrichtung herabzusetzen, ist diese in weiterer Ausgestaltung der Erfindung mit abschaltbaren feststehenden Kurzschlußwicklungen versehen. Dabei besitzt die Strombegrenzungs- und Kurzschlußeinrichtung neben einer im Strompfad der Einspeisung liegenden feststehenden Spule eine durch den durch diese Spule fließenden Strom beeinflußbaren, beweglichen Kurzschlußzylinder, der mit einem mit einem feststehenden Erdkontakt in Wirkverbindung stehenden Kontaktstab fest verbunden ist, wobei bei Herabsetzung des Schwellwertes für das Ansprechen der Strombegrenzungs- und Kurzschlußeinrichtung der Schwellwert für den Beginn der Bewegung des Kurzschlußzylinders herabsetzbar ist.

Nach einem weiteren Merkmal der Erfindung sind bei dieser Schaltanlage, und zwar unabhängig davon, ob eine Mehrfacheinspeisung oder eine einseitige Einspeisung vorgesehen ist, die Leistungsschalter in den Einspeisungen für den q-fachen Nennstrom der Einspeisungen, wobei q im allgemeinen = 3 ist, die Kuppelschalter nach dem q-fachen Nennstrom der leistungsstärksten Einspeisung und die Abgangsschalter in den Abgängen für den q-fachen Nennstrom der zugehörigen Einspeisung ausgelegt, wobei die Strombegrenzungs- und Kurzschlußeinrichtung ohne Kurzschließerteil
aus geführt ist und durch die Anpaßautomatik zuerst der
Kuppelschalter und danach der Abgangsschalter des fehlerbehafteten Abganges auslösbar ist. Unabhängig davon, wie
nun die bei der erfindungsgemäßen Schaltanlage zur Anwendung kommende Strombegrenzungs- und Kurzschlußeinrichtung
ausgebildet ist, kann bei dieser Auslegung der eingesetzten Schaltgeräte also auf den Kurzschließerteil der Strombegrenzungs- und Kurzschlußeinrichtung verzichtet werden.
Kommt demgegenüber jedoch eine komplette Strombegrenzungs-
und Kurzschlußeinrichtung zur Anwendung, so ist eine weitere Herabsetzung der Auslegung der in der Schaltanlage
eingesetzten Schaltgeräte möglich, derart, daß die Leistungsschalter in den Einspeisungen zwar auch wieder für
den q-fachen Nennstrom der Einspeisungen, wobei q im allgemeinen = 3 ist, die Kuppelschalter für den r-fachen
Nennstrom der leistungsstärksten Einspeisung und die Abgangsschalter für den r-fachen Nennstrom des jeweiligen
Abganges im Ausschaltvermögen ausgelegt sind, wobei
r = 1,5 ... 2 des jeweiligen Nennstromes ist, und durch
die Anpaßautomatik der begrenzte Fehlerstrom des fehlerbehafteten Abganges mittels des zugehörigen Abgangsschalters und danach der begrenzte Sammelschienenkurzschluß
durch das Schaltgerät der Strombegrenzungs- und Kurzschlußeinrichtung abschaltbar ist.

Im folgenden wird die Erfindung anhand von ein Ausführungsbeispiel darstellenden Zeichnungen näher erläutert. Es
zeigen

Figur 1 den Aufbau einer Strombegrenzungs- und Kurzschlußeinrichtung, wie sie in der Schaltanlage zur An-
　　　　wendung kommen kann und

Figur 2 eine Schaltanlage mit zwei Einspeisungen, denen
jeweils eine Strombegrenzungs- und Kurzschlußeinrichtung zugeordnet ist.

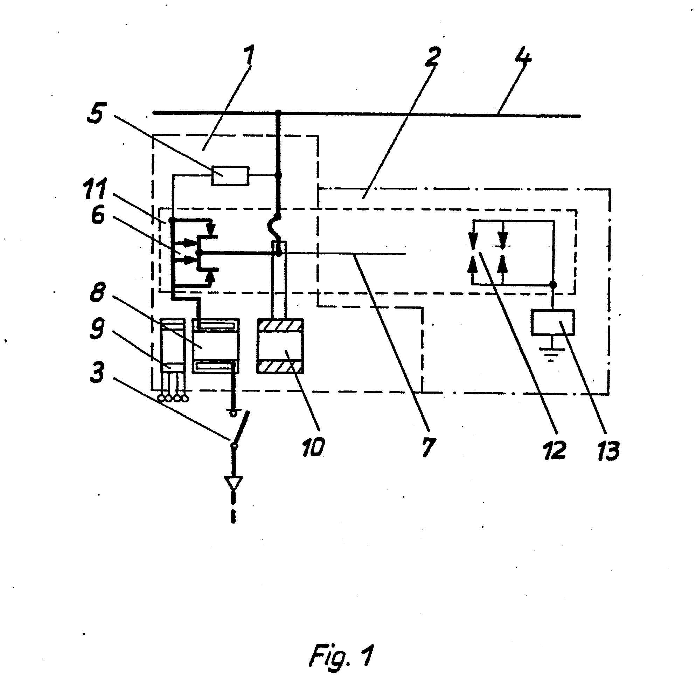

Die in der Figur 1 dargestellte Strombegrenzungs- und
Kurzschlußeinrichtung 1; 2, die nach dem für den q-fachen
Einspeisestrom, wobei q im allgemeinen = 3 ist, ausgelegten Leistungsschalter 3 und vor der Sammelschiene 4 einer
Schaltanlage angeordnet ist, besteht aus einer im Fehlerfall in den Strompfad einschaltbaren Begrenzungsimperanz
5, einem Kommutierungskontakt 6, einem Kontaktstab 7, einer
feststehenden Spule 8, einer abschaltbaren feststehenden
Kurzschlußwicklung 9 und aus einem beweglichen Kurzschlußzylinder 10, der über ein Kontaktsystem 11, bestehend aus
dem Kommutierungskontakt 6, dem Kontaktstab 7 und einem
Erdkontakt 12, den Strompfad auftrennt, die Begrenzungsimpedanz 5 zuschaltet und die Sammelschiene 4 über den
Erdkontakt 12 erdet, wenn das Schaltgerät 13 geschlossen
ist. Im Normalbetrieb fließt der Betriebsstrom über den
Leistungsschalter 3, die feststehende Spule 8, den Kommutierungskontakt 6 und über den Kontaktstab 7 zur Sammelschiene 4. Das Prinzip der Strombegrenzungs- und Kurzschlußeinrichtung 1; 2 beruht darauf, daß im Fehlerfall
ein durch den Fehlerstrom gespeistes elektrodynamisches
Antriebssystem, bestehend aus der feststehenden Spule 8
und dem beweglichen Kurzschlußzylinder 10, die Begrenzungsimpedanz 5 in der Art einschaltet, daß der mit dem
Kurzschlußzylinder 10 starr verbundene Kontaktstab 7 den
Kommutierungskontakt 6 öffnet und der Strom jetzt über
den Leistungsschalter 3, die feststehende Spule 8 und
über die Begrenzungsimpedanz zur Sammelschiene 4 fließt.
Nach der Auftrennung des Kommutierungskontaktes 6, dieser
ist also nicht mehr mit dem Kontaktstab 7 verbunden, geht
die Bewegung des beweglichen Kurzschlußzylinders 10 weiter,
bis nach einem Schaltweg der Kontaktstab 7 mit dem Erd-

kontakt 12 in Berührung kommt und, wenn das Schaltgerät 13
geschlossen ist, die Sammelschiene 4 erdet. Ist der Erdkontakt 12 vorhanden und das Schaltgerät 13 geschlossen,
arbeitet die Strombegrenzungs- und Kurzschlußeinrichtung
1; 2 als Strombegrenzer und Kurzschließer; ist jedoch der
Erdkontakt 12 nicht vorhanden bzw. das Schaltgerät 13 geöffnet, dann arbeitet die Strombegrenzungs- und Kurzschlußeinrichtung 1; 2 nur als Strombegrenzer.

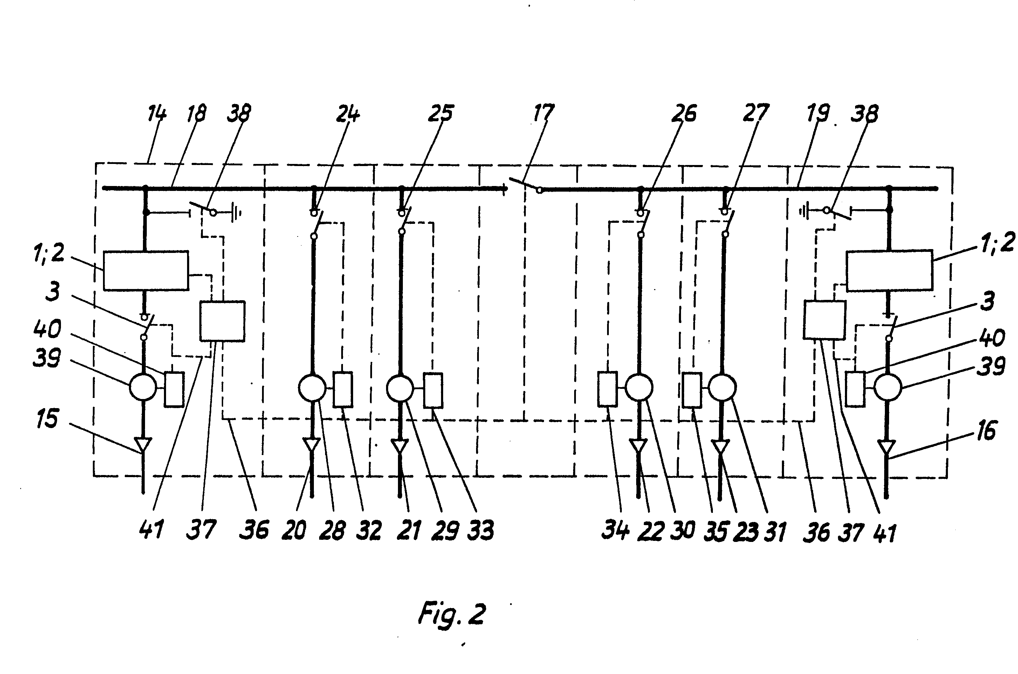

Bei der in Figur 2 gezeigten Schaltanlage 14 besitzt diese
zwei Einspeisungen 15; 16, die über Kabel ausgeführt sein
können, wobei in jeder Einspeisung 15; 16 eine zentrale
Strombegrenzungs- und Kurzschlußeinrichtung 1; 2 vorgesehen ist. Der Kuppelschalter 17, ausgelegt für den q-fachen
Nennstrom, im allgemeinen ist q = 3, der leistungsstärksten Einspeisung, hat die Funktion, die Einspeisungen 15;
16 mit den zugehörigen Sammelschienenabschnitten 18; 19
sowie mit den Abgängen 20; 21; 22; 23 zu koppeln bzw. zu
entkoppeln. Erfolgt bei dieser Schaltanlage 14 eine einseitige Einspeisung, ist also der Kuppelschalter 17 geöffnet, so ist die Arbeitsweise dieser Schaltanlage 14 folgende:

Die Strombegrenzungs- und Kurzschlußeinrichtung 1; 2
spricht immer dann selbsttätig an, wenn das Verhältnis
von Fehlerstrom zum Nennstrom der Einspeisung 15 $i/I_n = p$
ist, wobei i der Momentanwert des Stromes und $I_n$ der
Stromscheitelwert in der Einspeisung 15 ist und somit p
eine Größe ist, die der Schwellwert für das Ansprechen
des beweglichen Kurzschlußzylinders 10 ist und im allgemeinen = 1,7 ... 2,0 des Nennstromes ist. Das tritt immer
dann ein, wenn Kurzschlüsse an oder nahe der Sammelschienenabschnitte 18; 19 auftreten. Ist der Fehlerstrom im
Abgang 20 und/oder 21 bzw. 22 und/oder 23 kleiner als der
q-fache Nennstrom des entsprechenden Abganges 20; 21; 22;

23 (im allgemeinen q = 3), so wird der Abgangsschalter 24 und/oder 25 bzw. 26 und/oder 27 von der Stromerfassung als Bestandteil des Fehlerstromsensors 28 und/oder 29 bzw. 30 und/oder 31 über einen Logikbaustein 32 und/oder 33 bzw. 34 und/oder 35 direkt angesteuert und schaltet den Fehlerstrom ab, weil das Abschaltvermögen des Abgangsschalters 24; 25; 26; 27 für den q-fachen Nennstrom des entsprechenden Abganges 20; 21; 22; 23 ausgelegt ist. Ist der Fehlerstrom beispielsweise des Abganges 20 größer als der q-fache Nennstrom des Abgangsschalters 24, liegt aber noch unterhalb des Schwellwertes für das Ansprechen der Bewegung des Kurzschlußzylinders 10, so erhält über die Stromerfassung als Bestandteil des Fehlerstromsensors 28, den Logikbaustein 32 und über eine Informationsleitung 36 eine eine logische Verknüpfung durchführende, jeder Strombegrenzungs- und Kurzschlußeinrichtung 1; 2 zugeordnete Anpaßautomatik 37 die zur logischen Verknüpfung erforderlichen Informationen in der Art, daß über die abschaltbare feststehende Kurzschlußwicklung 9 der Strombegrenzungs- und Kurzschlußeinrichtung 1; 2 der Schwellwert für den Beginn der Bewegung des Kurzschlußzylinders 10 gesenkt wird. Der Abgangsschalter 24 kann jetzt nach dem Ansprechen der Strombegrenzungs- und Kurzschlußeinrichtung 1; 2 den fehlerbehafteten Abgang 20 abschalten, wobei danach das Schaltgerät 13 die Erdverbindung aufhebt und der Kurzschlußzylinder 10 selbsttätig in seine Ruhelage zurückgeht (Figur 1).

Die Anpaßautomatik 37 der Strombegrenzungs- und Kurzschlußeinrichtung hat einerseits die Erhöhung der Empfindlichkeit des Ansprechens des Kurzschlußzylinders 10 bei stromschwachen Fehlern zur Aufgabe und andererseits die Verminderung der Empfindlichkeit bei Einschalt- und Anlaufströmen.

Wenn es erforderlich ist, Störlichtbogenfehler sehr schnell
abzuschalten, ist vorgesehen, die Schaltanlage 14 zusätzlich zu der Strombegrenzungs- und Kurzschlußeinrichtung
1; 2 mit superschnellen Kurzschließern 38 auszurüsten, so
daß auch hier über die schnelle Störlichtbogenerkennung
als Bestandteil des Fehlerstromsensors 39, einen Logikbaustein 40 und über eine Informationsleitung 41 die eine
logische Verknüpfung durchführende jeder Strombegrenzungs-
und Kurzschlußeinrichtung 1; 2 zugeordnete Anpaßautomatik 37 die zur logischen Verknüpfung erforderlichen Informationen erhält, so daß die Strombahn des superschnellen Kurzschließers 38 nach der Reaktionszeit der Strombegrenzungs- und Kurzschlußeinrichtung 1; 2 entlastet
wird und der Leistungsschalter 3 den Störlichtbogenfehler abschaltet.

Ist dagegen bei dieser Schaltanlage 14 der Kuppelschalter
17 geschlossen, erfolgt also eine zweifache Einspeisung -
das nachfolgende Schaltkonzept kann auch auf mehrfache
Einspeisung erweitert werden -, so wird bei leistungsstarken Einspeisungen auf die Sammelschienenabschnitte
18; 19 eine Kurzschlußstelle von beiden Einspeisungen 15;
16 gespeist, und zwar mit jeweils dem q-fachen Nennstrom
der Einspeisung, wenn die Strombegrenzungs- und Kurzschlußeinrichtung 1; 2 nur als Strombegrenzer arbeitet.
Da der betreffende Abgangsschalter 24; 25; 26; 27 nicht
den 2 . q-fachen Nennstrom (q = 3; 2 . q = 6) schalten
kann, sondern nur den q-fachen Nennstrom, muß vor dem
Abschalten des entsprechenden fehlerbehafteten Abganges
20; 21; 22; 23 der Kuppelschalter 17 die Einspeisung 15;
16 entkoppeln. Arbeitet die Strombegrenzungs- und Kurzschlußeinrichtung 1; 2 als Strombegrenzer und Kurzschließer, so wird ein anderes Schaltregime realisiert, indem
über die geschlossenen Kurzschließerbahnen (Kontaktstab
7 an Erdkontakt 12 und Schaltgerät 13 geschlossen) der Einspeisung 15 und/oder 16 der Zustrom zur Fehlerstelle sofort abgeblockt wird (niederohmiger Nebenschluß), so daß der betreffende Abgangsschalter 24; 25; 26; 27 des entsprechenden fehlerbehafteten Abganges 20; 21; 22; 23 öffnen kann und die Kurzschlüsse aufgehoben werden, weil das Schaltgerät 13 geöffnet ist. Der Kuppelschalter 17 kann beim Betrieb der Strombegrenzungs- und Kurzschlußeinrichtung 1; 2 als Strombegrenzer und Kurzschließer zeitgleich mit dem betreffenden Abgangsschalter 24; 25; 26; 27 des entsprechenden fehlerbehafteten Abganges 20; 21; 22; 23 geöffnet werden und somit einer der Sammelschienenabschnitte 18; 19 wieder versorgt werden.

Patentansprüche

1. Schaltanlage mit einer in der Einspeisung (15; 16) vorgesehenen zentralen Strombegrenzungs- und Kurzschlußeinrichtung (1; 2), einem superschnellen Kurzschließer (38) und einem Leistungsschalter (3) sowie mit in den Abgängen (20; 21; 22; 23) vorgesehenen Abgangsschaltern (24; 25; 26; 27), wobei bei mehrfacher Einspeisung die Sammelschienenabschnitte (18; 19) über einen Kuppelschalter (17) gekoppelt sind, dadurch gekennzeichnet, daß jeder in einer Einspeisung (15; 16) vorgesehenen zentralen Strombegrenzungs- und Kurzschlußeinrichtung (1; 2), die eine verminderte Empfindlichkeit für Einschalt- und Anlaufströme besitzt, eine eine logische Verknüpfung von Strominformationen durchführende Anpaßautomatik (37) zugeordnet ist, die einerseits über eine Informationsleitung (36) und einen jedem Abgang (20; 21; 22; 23) zugeordneten Logikbaustein (32; 33; 34; 35) mit der Stromerfassung als Bestandteil des ebenfalls jedem Abgang (20; 21; 22; 23) zugeordneten Fehlerstromsensors (28; 29; 30; 31) in Verbindung steht, derart, daß bei Fehlerströmen, die größer sind als ein festgelegter mehrfacher Wert des Nennstromes des jeweiligen Abgangsschalters (24; 25; 26; 27), der Schwellwert für das Ansprechen der Strombegrenzungs- und Kurzschlußeinrichtung (1; 2) zur Herbeiführung eines Kurzschlusses herabsetzbar ist, und andererseits über eine weitere Informationsleitung (41) über einen der Einspeisung (15; 16) zugeordneten Logikbaustein (40) mit der schnellen Störlichtbogenerkennung als Bestandteil des ebenfalls der Einspeisung (15; 16) zugeordneten Fehlerstromsensors (39) in Verbindung steht, derart, daß die Strombahn des superschnellen Kurzschließers (38) nach der Reaktionszeit der Strombegrenzungs- und Kurzschlußeinrichtung (1; 2) entlastbar ist, wobei gleichzeitig dieser Fehlerstrom durch den in der Einspeisung (15; 16) liegenden Leistungsschalter (3) abschaltbar ist.

2. Schaltanlage nach Patentanspruch 1, bei der nach der
Herabsetzung des Schwellwertes für das Ansprechen der
Strombegrenzungs- und Kurzschlußeinrichtung (1;.2) zur
Herbeiführung eines Kurzschlusses der fehlerbehaftete
Abgang (20; 21; 22; 23) durch den diesem Abgang (20;
21; 22; 23) zugeordneten Abgangsschalter (24; 25; 26;
27) abschaltbar ist, wonach die Strombegrenzungs- und
Kurzschlußeinrichtung wieder ihre Ausgangslage nach
Aufhebung der Erdverbindung durch das der Strombegrenzungs- und Kurzschlußeinrichtung (1; 2) zugeordnete
Schaltgerät (13) einnimmt.

3. Schaltanlage nach Patentanspruch 1, bei der bei Fehlerströmen, die kleiner sind als der festgelegte mehrfache Wert des Nennstromes des jeweiligen Abganges
(20; 21; 22; 23), der diese Fehlerströme abschaltende
Abgangsschalter (24; 25; 26; 27) von der Stromerfassung als Bestandteil des Fehlerstromsensors (28; 29;
30; 31) über den Logikbaustein (32; 33; 34; 35) direkt
zur Abschaltung des Fehlerstromes ansteuerbar ist.

4. Schaltanlage nach Patentanspruch 1 bis 3, bei der anstelle des in der jeweiligen Einspeisung (15; 16) befindlichen Leistungsschalters (3) ein Lastschalter
oder ein Lasttrennschalter vorgesehen ist, während die
Abgangsschalter (24; 25; 26; 27) und Kuppelschalter
(17) Lasttrennschalter sind.

5. Schaltanlage nach Patentanspruch 1 bis 4, bei der zur
Herabsetzung des Schwellwertes für das Ansprechen der
Strombegrenzungs- und Kurzschlußeinrichtung (1; 2)
diese mit abschaltbaren feststehenden Kurzschlußwicklungen versehen ist, so daß nach dem Ansprechen der Strombegrenzungs- und Kurzschlußeinrichtung (1; 2)
der fehlerbehaftete Abgang (20; 21; 22; 23) durch den
diesem Abgang (20; 21; 22; 23) zugeordneten Abgangsschalter (24; 25; 26; 27) abschaltbar ist.

6. Schaltanlage nach Patentanspruch 1 bis 5, bei der die
Strombegrenzungs- und Kurzschlußeinrichtung (1; 2) neben einer im Strompfad der Einspeisung (15; 16) liegenden feststehenden Spule (8) einen durch den durch
diese Spule (8) fließenden Strom beeinflußbaren, beweglichen Kurzschlußzylinder (10) besitzt, der mit
einem mit einem feststehenden Erdkontakt (12) in Wirkverbindung stehenden Kontaktstab (7) fest verbunden
ist, wobei bei Herabsetzung des Schwellwertes für das
Ansprechen der Strombegrenzungs- und Kurzschlußeinrichtung (1; 2) der Schwellwert für den Beginn der
Bewegung des Kurzschlußzylinders (10) herabsetzbar
ist.

7. Schaltanlage nach Patentanspruch 1 bis 6, bei der die
Leistungsschalter (3) in den Einspeisungen (15; 16)
für den q-fachen Nennstrom der Einspeisung (15; 16),
wobei q im allgemeinen = 3 ist, die Kuppelschalter
(17) nach dem q-fachen Nennstrom der leistungsstärksten Einspeisung (15; 16) und die Abgangsschalter (24;
25; 26; 27) in den Abgängen (20; 21; 22; 23) für den
q-fachen Nennstrom der zugehörigen Einspeisung (15; 16)
ausgelegt sind, wobei die Strombegrenzungs- und Kurzschlußeinrichtung (1; 2) ohne Kurzschließerteil ausgeführt ist und durch die Anpaßautomatik (37) zuerst
die Kuppelschalter (17) und danach der Abgangsschalter (24; 25; 26; 27) des fehlerbehafteten Abganges
(20; 21; 22; 23) auslösbar ist.

8. Schaltanlage nach Patentanspruch 1 bis 6, bei der die Leistungsschalter (3) in den Einspeisungen (15; 16) für den q-fachen Nennstrom der Einspeisungen (15; 16), wobei q im allgemeinen = 3 ist, die Kuppelschalter (17) für den r-fachen Nennstrom der leistungsstärksten Einspeisung (15; 16) und die Abgangsschalter (24; 25; 26; 27) für den r-fachen Nennstrom des jeweiligen Abganges (20; 21; 22; 23) im Ausschaltvermögen ausgelegt sind, wobei r = 1,5 ... 2,0 des Nennstromes ist, und durch die Anpaßautomatik (37) der begrenzte Fehlerstrom des fehlerbehafteten Abganges (20; 21; 22; 23) mittels des zugehörigen Abgangsschalters (24; 25; 26; 27) und danach der begrenzte Sammelschienenkurzschluß durch das Schaltgerät (13) der Strombegrenzungs- und Kurzschlußeinrichtung (1; 2) abschaltbar ist.

0189566

Fig. 1

Fig. 2